# EUROPEAN PATENT APPLICATION

(11) **EP 0 761 749 A1**
(43) Date of publication of application: **12.03.1997**
(21) Application number: 96113065.5
(22) Date of filing: 14.08.1996
(51) Int. Cl.: C08L 9/02, C08L 27/06

(54) **Heat resistant butadiene/acrylonitrile-polyvinyl chloride blends**

(30) Priority: 25.08.1995 US 519494
(71) Applicant: THE GOODYEAR TIRE & RUBBER COMPANY, Akron, Ohio 44316-0001 (US)
(72) Inventor: Horvath, James Walter, Cuyahoga Falls, Ohio 44221 (US)
(74) Representative: Leitz, Paul

(57) **Abstract**

A composition of acrylonitrile/butadiene having better heat aging performance. This invention relates to extended heat aging performance of antioxidant bound acrylonitrile/butadiene with high intrinsic viscosity, usually greater than 1.5 to about 1.7, polyvinyl chloride relative to that obtainable with conventional nitrile rubber polyvinyl chloride blends. The antioxidant bound acrylonitrile/butadiene polymer preferably contains from 28 to 33% by weight of acrylonitrile and the antioxidant bound acrylonitrile constitutes about 10 to about 90% of the blend with 75 to 25% amounts being normally preferred.

## Description

### Technical Field

An improved butadiene/acrylonitrile blend with polyvinyl chloride that exhibits superior heat resistance at temperatures of 125°C and higher for longer times are obtainable with polymer bound antioxidants of butadiene/acrylonitrile blended with ultra high molecular weight polyvinyl chloride. These antioxidants bound butadiene/acrylonitrile copolymers are fluxed with high molecular weight polyvinyl chloride (PVC) at a temperature sufficient to fuse the PVC to give a blend that has better aging resistance than obtained with conventional NBR/PVC blend and better compression set.

### Background Art

Fluxed nitrile/PVC blends have been used for a number of years in oil and fuel resistant applications requiring tough ozone and abrasion resistant products. They are easily processed and cured, economical in cost, and can be used in brightly colored compounds, as well as black. Unfortunately, they are limited to 100°C and lower usage.

The conventional NBR/PVC compounds are used in hose jackets, wire and cable covers, shoe soles, and blown closed cell sponge insulation and athletic padding. They are often used competitively at temperatures below 100°C against polychloroprene, chlorinated polyethylene, and chlorosulfonated polyethylene depending upon the application requirements.

Nitrile/PVC blends have better oil and fuel resistance than their competitive counterparts, but are not as good in compression set resistance due to the thermoplastic nature of PVC. They are equivalent to chloroprene in heat resistance, but not as good as chlorinated polyethylene and chlorosulfonated polyethylene as they have a temperature limit of essentially 100°C which has limited their use to service where the temperature is less than 100°C.

### Summary of the Invention

I have discovered that it is possible to step up from 100°C heat resistance to 135°C using polymer bound antioxidant stable butadiene/acrylonitrile, viz. CHEMIGUM HR terpolymers with high intrinsic viscosity PVC. Compounding is the same, processing and versatile cure capability are the same as with conventional NBR/PVC blends, but heat aging capability at 135°C is improved beyond that of conventional nitrile rubber/PVC based blends. Therefore, these new blends are more competitive with the currently used exotic polymers at service temperatures of 135°C.

Compounded physical properties of RCV 7490, a 70/30 blend of antioxidant bound butadiene acrylonitrile/polyvinyl chloride of high intrinsic viscosity and commercial Paracril OZO, a blend of acrylonitrile/butadiene/polyvinyl chloride of less than 1.5 intrinsic viscosity in black and white filled compounds are shown in the Table. RCV 7490 exhibits a faster cure rate with adequate scorch safety, and original physical properties are similar.

Both polymer blends exhibit adequate static ozone resistance, but RCV 7490 demonstrates dynamic ozone resistance whereas Paracril OZO does not; cracking was observed after 24 hours with Paracril OZO blend at elevated temperatures.

ASTM No. 1 oil embrittles both blends. RCV 7490 is better in ASTM No. 3 oil, Fuel C with water aging, and Fuel C with ethanol. Low temperature stiffening is similar, but Paracril OZO is slightly better in impact brittleness, believed to be due to a slightly lower acrylonitrile content than in RCV 7490 at temperatures less than 100°C.

The real separating characteristics between these blends is shown in 121°C heat age resistance. The black loaded RCV 7490 compound losses 70% of its Elongation in 15 days at 121°C, while the Paracril OZO is brittle. These black loaded compounds may have extra stabilizing antioxidant added to them and the plasticizer also adds some synergistic stabilizing characteristics to them. The white filled compounds do not contain added stabilizing ingredients, and here is where a great difference is seen in the blends. RVC 7490 losses 45% of its Elongation in 20 days aging at 121°C, whereas Paracril OZO losses 45% Elongation in 3 days, and is brittle in 10 days. Thus, it is apparent that blends of polymer bound antioxidant with high intrinsic viscosity polyvinyl chloride has greatly stabilized the blend at elevated temperature and, thus, my invention has useful service at higher temperatures.

Further, the white filled RCV 7490 compound can withstand 7 days air oven aging at 135°C with 55% Elongation loss and 1.5 days at 150°C to 55% Elongation loss whereas the Paracril OZO blend of the prior art is brittle and severely cracked.

As is seen from the data of the Table polymer bound antioxidant stabilized polyacrylonitrile/butadiene is different from the prior art polyacrylonitrile/butadiene in fluxed polyvinylchloride blends. The fused polyvinyl chloride bound antioxidant stabilized polyacrylonitrile/butadiene blend has improved compression set resistance when the polyvinyl chloride has intrinsic viscosity of 1.5 preferably 1.7 and higher relative to the blends where the intrinsic viscosity of polyvinyl chloride is less than 1.4. The fused blends of this invention offer improved heat age resistance as evidenced by the percent change in elongation with from 0 to 15 days at 121°C and the change in hardness as the blends tend to resinify. Selected antioxidants and polyvinyl chloride of intrinsic viscosity of 1.5 and higher contribute to improved compression set resistance and heat aging of the resulting blends.

The necessary cure system are those that cure the acrylonitrile/butadiene rubber. The resulting cured/fused blends have satisfactory ozone resistance when polyvinyl chloride has an intrinsic viscosity of at least 0.8 to 1.5 and preferably of 1.6 and as high as 1.7. These pre-defined polyvinyl chlorides are represented by tradename Oxy 200 PVC to Oxy 400 PVC products. The well-known bound antioxidant acrylonitrile butadiene rubbers are especially preferred in this invention as they offer greatly improved resistance to degrading by resinification which has been a problem with exposure to hot fuels and oils.

These bound antioxidant acrylonitrile/butadiene rubbers are usually made by dissolving the bound antioxidant monomer such N(4-anilinophenyl) methacrylamide in small amount of the acrylonitrile and the solution is pumped into the usual polymerization mixture of acrylonitrile and butadiene as specifically explained in Table 2 of James W. Horvath's article "Bound Antioxidants Stabilized NBR in Automobile Applications" on pages 19-62, Elastomerics, August, 1979. The nature of these monomers useful for preparing bound antioxidant acrylonitrile/butadiene polymers are further described in the article by R. H. Kline, presented at the meeting of the Rubber Division, American Chemistry Society, Toronto, Canada, May 7-10, 1974. Specifically these monomers belong to the two classes of phenolic and amine types polymerizable unsaturated monomer. The above two references are incorporated herein to supply the disclosure of these monomers and their bound antioxidant acrylonitrile/butadiene rubbers produced therefrom normally about 1 to 6% by weight of bound antioxidant in acrylonitrile/butadiene polymer is satisfactory but 1.5 to 3% is preferred.

The bound antioxidant monomer can be used with high molecular weight PVC to produce bound antioxidant polymer blends of unusual properties when fused.

The nature of this invention and its advantages are further disclosed and illustrated by the following illustrative and exemplar examples as set forth in attached Table where all parts are by weight unless otherwise indicated.

Standard ASTM test procedures were used throughout the testing, except where indicated. ASTM D 3182 was used for sample preparation, ASTM D 2084 for vulcanization characteristics, ASTM D 412 for physical properties, ASTM D 295 for Compression Set, ASTM D 471 for fluid aging and ASTM D1243-66 for viscosity determination of polyvinyl chloride. Ozone testing was done in an Orec Ozone Chamber at 50 pphm ozone concentration at 38°C. Bent Loop and 20% Stretched Samples were studied.

Polymer blends were prepared with high temperature mixing of the acrylonitrile/butadiene bound antioxidant rubber with polyvinylchloride and the known PVC stabilizer. The polyvinyl chloride polymers where occidental chemical companies having intrinsic viscosities of 1.5 run according to ASTM method D1243-66 using cyclohexane as a solvent and 0.2 ± 0.002 grams of moisture free polymer made to 100 ml of solution and the intrinsic viscosity calculated per the method formula. The polymers were then compounded in a water cooled Banbury. Curatives were added in a second Banbury pass. No special mix precautions or procedures were attempted in mixing the blends.

The initial screening of polyvinyl chloride and acrylonitrile/butadiene bound antioxidant terpolymer blends was done in black loaded compounds. In later runs white loading was used. These formulations and associated data are in the following Table.

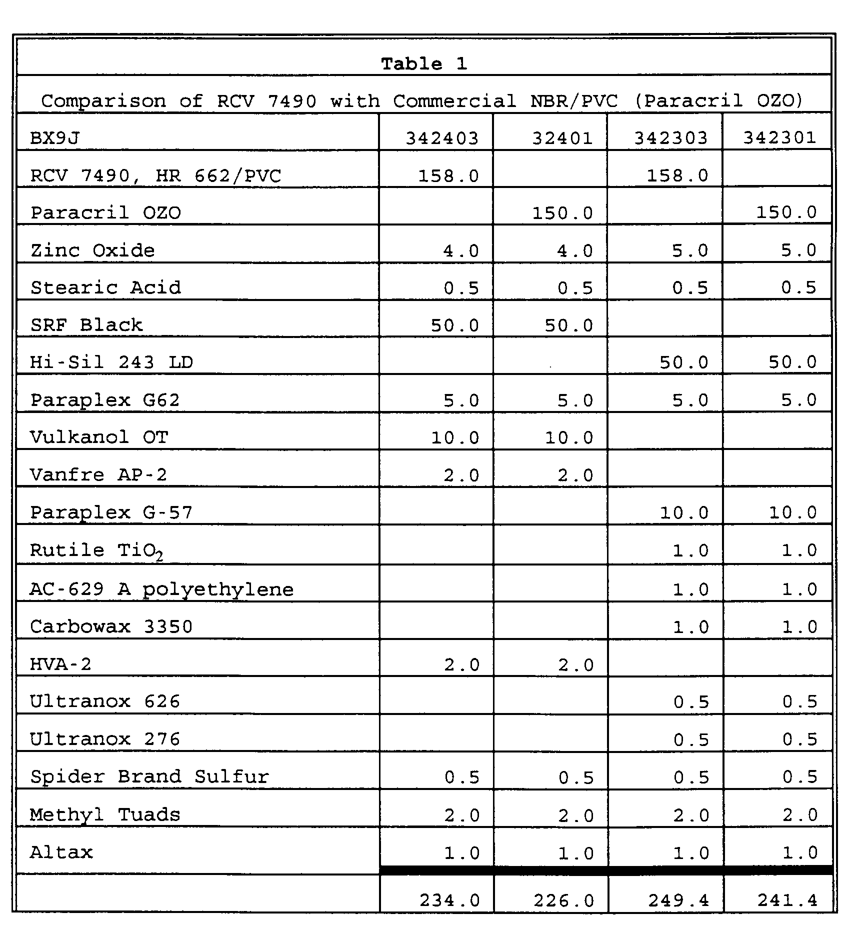

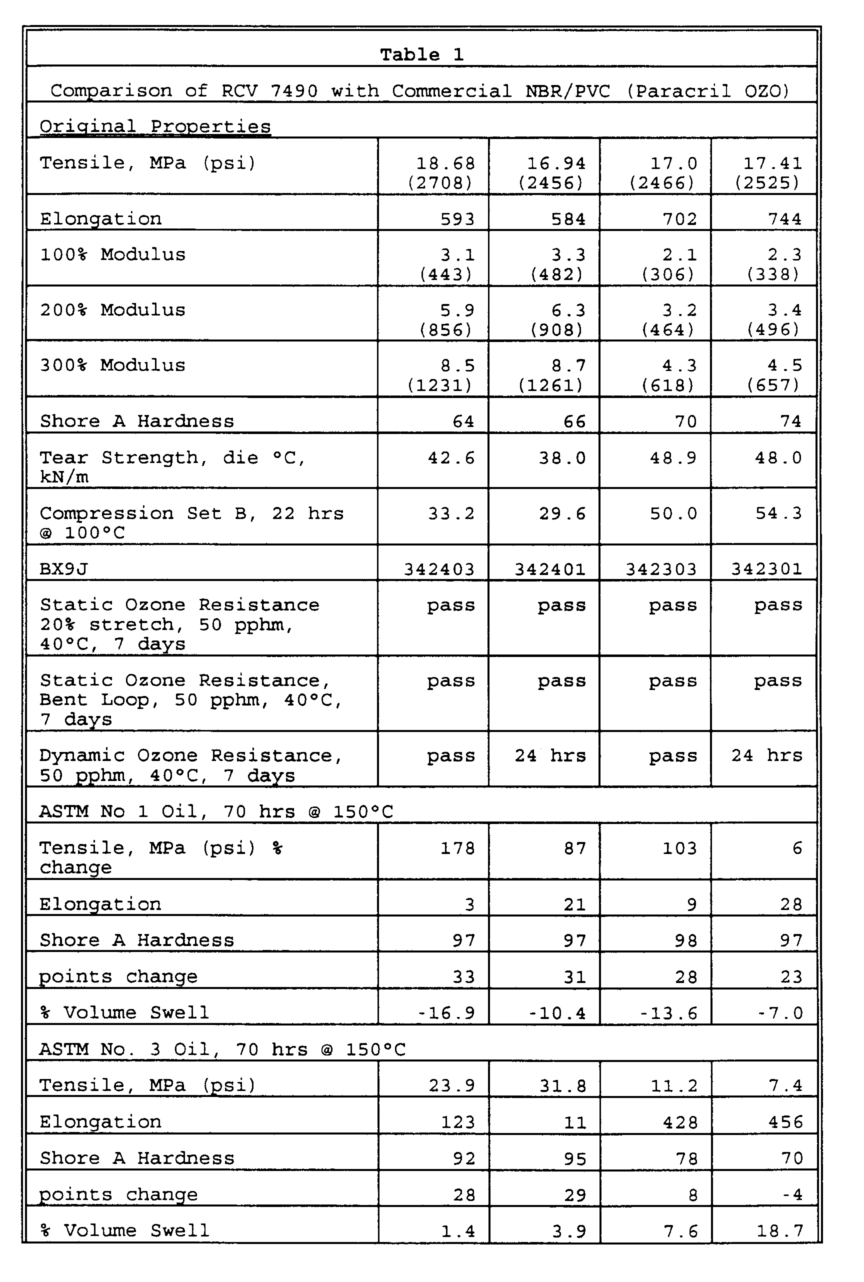

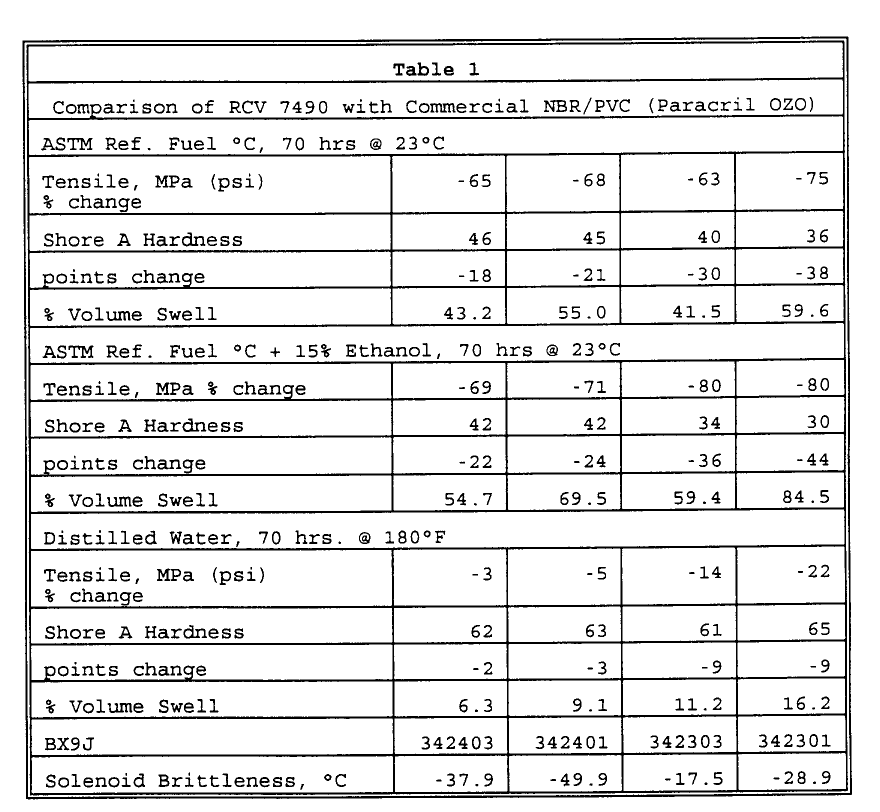

### LIST OF INGREDIENTS AND THEIR NATURE USED IN THE TABLE

- RCV 7490: 70/30 CHEMIGUM HR662 antioxidant bound acrylonitrile/butadiene PVC, The Goodyear Chemical Division
- Paracril OZO: 70/30 NBR/PVC blend no bound antioxidant, Uniroyal Chemical Co.
- Zinc oxide:
- Stearic acid:
- ASTM N-762 black:
- Hi-Sil, 243LD: hydrated amorphous silica
- HVA-2: N,N'-m-phenylenediamaleimide
- Paraplex G-62: epoxy soya oil
- Vulkanol OT: ether-thio-ether plasticizer
- Paraplex G-57: polyester plasticizer
- Rutile TiO2: titanium oxide
- AC-629A: polyethylene, Allied Chemical
- Carbowax 3350: polyethylene glycol
- Vanfre AP-2: 85 Cm.p. proprietary process aid, R. T. Vanderbilt
- Ultranox 626: bis(2,4-di-t-butylphenyl)Pentaerythritol Diphosphite
- Ultranox 276: Octadecyl3,5di-tert-butyl-4-hydroxyhydrocinnamate
- Spider Brand Sulfur Co.: magnesium oxide treated sulfur, Stauffer Chemical Co.
- Methyl Tuads: Tetramethylthiuram disulfide
- Altax: Benzothiazyl disulfide

While certain representative embodiments and details have been shown for the purpose of illustrating the invention, it will be apparent to those skilled in this art that various changes and modifications may be made therein without departing from the spirit or scope of the invention.

## Claims

1. A blend of bound antioxidant stabilized polyacrylonitrile/butadiene rubber and polyvinyl chloride characterized in that it exhibits a heat resistance of 121°C said polyvinyl chloride having about 1.6 intrinsic viscosity as determined by ASTM method D1243-66, said acrylonitrile/butadiene is present in a fused blend in about 90% to 10% by weight.

2. The blend of claim 1 characterized by being cured with a sulfur curative.

3. The blend of claim 1 characterized in that the blend contains about 50 to about 10% of said polyvinyl chloride and about 50 to about 10% of said acrylonitrile/butadiene polymer.

4. The blend of claim 2 characterized by having a loading of about 5% to 50% by weight of a mineral filler based on the polymer.

5. The blend of claim 2 characterized in that the filler is other than carbon black.

6. The blend of claim 2 characterized in that the blend is loaded with silica.

7. The blend of claim 1 characterized in that the antioxidant bound acrylonitrile/butadiene contains from 1.5 to 3% by weight of the bound antioxidant.

8. The blend of claim 1 characterized in being fused to yield a fused blend stabilized at 121°C to 135°C for ten (10) days.

9. The blend of claim 1 wherein the antioxidant bound polyacrylonitrile/butadiene is characterized by containing about 28 to about 33% by weight of acrylonitrile.

10. The blend of claim 1 wherein the bound antioxidant stabilized polyacrylonitrile/butadiene is characterized by being made by polymerizing acrylonitrile, butadiene and a monomer selected from the class consisting of phenolic antioxidant monomer and an amine antioxidant monomer.
